**Europäisches Patentamt**

**European Patent Office**

**Office européen des brevets**

(19)

(11) Veröffentlichungsnummer: **0 062 784 B1**

(12) # EUROPÄISCHE PATENTSCHRIFT

(45) Veröffentlichungstag der Patentschrift:
**14.11.84**

(51) Int. Cl.³: **C 08 G 18/32,** C 08 G 18/14, C 08 G 18/65, C 08 J 9/00

(21) Anmeldenummer: **82102341.3**

(22) Anmeldetag: **22.03.82**

(54) **Verfahren zur Herstellung von flammwidrigen, Harnstoff- und Urethangruppen aufweisenden Leichtschaumstoffen.**

(30) Priorität: **02.04.81 DE 3113387**

(43) Veröffentlichungstag der Anmeldung:
**20.10.82 Patentblatt 82/42**

(45) Bekanntmachung des Hinweises auf die Patenterteilung:
**14.11.84 Patentblatt 84/46**

(84) Benannte Vertragsstaaten:
**AT BE CH DE FR GB IT LI**

(56) Entgegenhaltungen:
**EP - A - 0 005 903**
**DE - A - 1 173 446**
**FR - A - 2 190 867**
**US - A - 4 291 129**

(73) Patentinhaber: **BAYER AG, Konzernverwaltung RP Patentabteilung, D-5090 Leverkusen 1 Bayerwerk (DE)**

(72) Erfinder: **Wiedermann, Rolf, Dr., Wiesenstrasse 18, D-5068 Odenthal (DE)**

## Beschreibung

Diese Erfindung betrifft ein Verfahren zur Herstellung von flammwidrigen Harnstoff- und Urethangruppen aufweisenden Leichtschaumstoffen sowie die hiernach erhältlichen Leichtschaumstoffe selbst.

Hierunter werden im folgenden nicht die bekannten Polyurethanweichschaumstoffe verstanden, sondern Schaumstoffe, die in ihrem Charakter eher den Polyurethanhartschaumstoffen ähneln. So erreicht z.B. eine erfindungsgemäss hergestellte papierbeschichtete Platte mit Rohdichte 17 kg/m³ eine Druckfestigkeit von 0,05 MPa. Erfindungsgemässe Schaumstoffe mit Rohdichte 12 kg/m³ sind so steif, dass sie sich bei der Dachsparrenisolierung nicht unter dem eigenen Gewicht durchbiegen. Die Rohdichte der erfindungsgemässen Produkte beträgt dabei höchstens 25 kg/m³ (0,025 g/cm³), bevorzugt höchstens 20 kg/m³ (0,02 g/cm³).

Polyharnstoffschaumstoffe, die durch Reaktion von Polyisocyanaten mit Wasser in Gegenwart von Katalysatoren und anderen Agentien, wie Weichmachern, Stabilisatoren, Füllstoffen, Flammschutzmitteln und gegebenenfalls Polyolen hergestellt werden, sind z.B. im EP Nr. 5903 beschrieben.

Der Einsatz dieser Schaumstoffe im Bauwesen ist aber fraglich, da sie nicht die Anforderungen an die B-2- oder B-1-Klassifizierung nach DIN 4102 erfüllen.

Es ist bekannt, dass Stärke und andere Polysaccharide eine Verbesserung des Flammschutzes in PUR-Hartschaumstoffen bringen.

Wie im Beispiel 7 gezeigt wird, tritt dieser Effekt bei leichten Polyharnstoffschaumstoffen nicht auf, es ist also in dieser Klasse keine Verbesserung des Flammschutzes zu beobachten. Überraschend wurde nun festgestellt, dass der Saccharidaustausch von Wasser durch eine wässerige Mono- und/oder Saccharidlösung, die die gleiche Menge Wasser wie vorher in die Formulierung einbringt, zu Leichtschaumstoffen führt, die nach DIN 4102 in die Klasse B 2 eingestuft werden.

Der Zusatz der wässerigen Saccharidlösung hat weiterhin den Vorteil, dass die Schaumstoffe unempfindlicher gegen Schrumpferscheinungen sind.

Hierbei ist vorteilhaft, dass Saccharidlösungen verwendet werden, die einen gewissen Teil an Oligosacchariden enthalten. Der Gehalt an Oligosacchariden in den verwendeten Lösungen sollte daher bei wenigstens 10% liegen.

Gegenstand der vorliegenden Erfindung ist ein Verfahren zur Herstellung von flammwidrigen Harnstoff- und Urethangruppen aufweisenden Leichtschaumstoffen einer Dichte von höchstens 0,025 g/cm³ durch Umsetzung eines Polyisocyanats mit wasserlöslichen Mono- und/oder Oligosacchariden und Wasser als Treibmittel in Gegenwart von mindestens zwei Hydroxylgruppen aufweisenden organischen Verbindungen einer OH-Zahl von 30 bis 250, Katalysatoren und phosphorhaltigen organischen Verbindungen als Flammschutzmittel sowie gegebenenfalls in Gegenwart von Kettenverlängerungsmitteln vom Molekulargewicht 32 bis 62 und weiteren, an sich bekannten Hilfs- und Zusatzmitteln, dadurch gekennzeichnet, dass das Polyisocyanat mit mindestens 1 Eq Wasser, in dem die Mono- und/oder Oligosaccharide gelöst worden sind, umgesetzt wird.

Erfindungsgemäss bevorzugt ist ein Verfahren, bei dem auf 100 Gew.-Teile Polyisocyanat 2 bis 30 Gew.-Teile Mono- und/oder Oligosaccharid verwendet werden.

Wie bereits erwähnt, wird vorzugsweise eine wässerige Lösung von Monosacchariden, die zu mindestens 10 Gew.-% (bezogen auf Monosaccharide) an Oligosacchariden enthält, verwendet. Oft wird mit Vorteil als Mono- und/oder Oligosaccharid eine Sorbose mit einem Oligosaccharidanteil von 10 bis 80 Gew.-% eingesetzt.

Als Polyisocyanat wird bevorzugt ein Gemisch aus Diphenylmethandiisocyanaten und Polyphenylpolymethylenpolyisocyanaten verwendet, das höchstens 50 Gew.-% 4,4'- und 2,4'-Diphenylmethandiisocyanat enthält, eingesetzt.

Erfindungsgemäss kommen als wasserlösliche Mono- und/oder Oligosaccharide solche der an sich bekannten Art in Frage, z.B. Xylose, Arabinose, Glucose, Mannose, Galactose, Fructose, Sorbose, Saccharose, Maltose, Cellubiose und über saure Behandlung abgebaute Dextrine und Stärken. Besonders hervorgehoben seien Glucose, Fructose, Saccharose sowie bevorzugt eine Sorbose mit einem Oligosaccharidanteil von 10 bis 80 Gew.-%.

Als Polyisocyanate kommen generell diejenigen in Betracht, die üblicherweise zur Herstellung von Polyharnstoff-, Polyurethan- und/oder Polyisocyanuratschaumstoffen verwendet und wie sie z.B. in der DE-OS Nr. 2922967, S. 13 bis 16, im einzelnen genannt werden.

Ausgangskomponenten sind ferner organische Verbindungen mit mindestens zwei Hydroxylgruppen und einer Hydroxylzahl von 30 bis 250, vorzugsweise 50 bis 200 (entsprechend Molekulargewichten von 62 bis 10 000). Hierunter versteht man insbesondere zwei bis acht Hydroxylgruppen aufweisende Verbindungen, vorzugsweise aber 2 bis 4 Hydroxylgruppen aufweisende Diole und Polyole, z.B. Polyester, Polyether, Polythioether, Polyacetale, Polycarbonate und Polyesteramide, wie sie für die Herstellung von homogenen und von zellförmigen Polyurethanen an sich bekannt sind.

Als einfachste Verbindungen kommen z.B. in Frage: Ethylenglykol, Diethylenglykol, Butandiol, Hexandiol, Glycerin, Hexantriol.

Die in Frage kommenden Hydroxylgruppen aufweisenden Polyester, Polyether, Polythioether, Polyacetale, Polycarbonate und Polyesteramide bzw. deren Derivate sind z.B. in der DE-OS Nr. 2922967, S. 17 bis 24, im einzelnen beschrieben.

Niedermolekulare, mindestens zwei OH-Gruppen aufweisende organische Verbindungen der angegebenen Hydroxylzahl (Molekulargewichte von 62 bis ca. 400) werden z.B. in der DE-OS Nr. 2922967 auf den S. 25 und 26 beschrieben.

Erfindungsgemäss werden an sich bekannte phosphorhaltige organische Verbindungen wie Trichlorethylphosphat, Trikresylphosphat, Triethylphosphit – in der Regel in Mengen von 0,5 bis 10 Gew.-%, bezogen auf das schäumfähige Reaktionsgemisch – mitverwendet.

Als Treibmittel wird Wasser, in dem die Mono- und/oder Oligosaccharide gelöst worden sind, in einer Menge von mindestens 1 Eq, bezogen auf die Polyisocyanatmenge, verwendet.

Gegebenenfalls können die an sich bekannten niedermolekularen (Molekulargewicht 32 bis 62) Kettenverlängerungs- und Vernetzungsmittel mitverwendet werden, z.B. solche, die in der DE-OS Nr. 2922967, S. 25-28, im einzelnen beschrieben werden.

Gegebenenfalls werden als Hilfs- und Zusatzmittel mit eingesetzt: Leicht flüchtige anorganische oder organische Substanzen als Treibmittel, Katalysatoren der an sich bekannten Art (die Katalysatoren werden in der Regel in einer Menge zwischen etwa 0,001 und 10 Gew.-%, bezogen auf die Menge an Verbindungen mit mindestens zwei OH-Gruppen, eingesetzt), oberflächenaktive Zusatzstoffe, wie Emulgatoren und Schaumstabilisatoren, Reaktionsverzögerer, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide. Diese Hilfs- und Zusatzmittel werden z.B. in der DE-OS Nr. 2922967, S. 32 bis 37, im einzelnen beschrieben.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im „Kunststoff-Handbuch", Bd. VII, herausgegeben von Vieweg und Höchtlen, Carl-Hanser-Verlag, München 1966, z.B. auf den S. 103 bis 113, beschrieben.

Durchführung des erfindungsgemässen Verfahrens: Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS Nr. 2764565 beschrieben werden. Einzelheiten über Verarbeitungseinrichtungen, die auch erfindungsgemäss in Frage kommen, werden im „Kunststoff-Handbuch", Bd. VII, herausgegeben von Vieweg und Höchtlen, Carl-Hanser-Verlag, München 1966, z.B. auf den S. 121 bis 205, beschrieben.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung: Isoliermaterialien im Bauwesen, z.B. für Steildächer, Rohre oder Fassaden.

Durch die Offenzelligkeit des Materials kann es auch zur Trittschalldämmung verwendet werden.

*Beispiele*

Die genannten Komponenten der Beispiele 1 bis 9 wurden jeweils mit einem Laborrührer, der eine Drehzahl von 4000 tr/min hatte, verrührt. Die Ausgangstemperatur der Komponenten betrug 23° C. Die Daten für die erhaltenen Leichtschaumstoffe sind in der Tabelle angegeben.

Beispiele 1, 5, 7, 9 sind Vergleichsbeispiele.

*Beispiel 8*

Der Schaumstoff aus Beispiel 2 wird unter Zusatz von 32 Gew.-Teilen eines Esters (hergestellt aus Adipinsäure, Diethylenglykol, Glycerin, Molekulargewicht 500, Hydroxylzahl 450) wiederholt. Man erhält einen Schaumstoff mit Rohdichte 13 kg/m³, der zäh-elastischer ist als derjenige aus Beispiel 2 und die B-2-Klassifizierung nach DIN 4102 behält.

*Tabelle*

| Beispiel | 1 | 2 | 3 | 4 | 5 | 6 | 7 | 9 |
|---|---|---|---|---|---|---|---|---|
| Triethylamin | 2 | 2,5 | 2,5 | 2,5 | — | — | 2 | 2,5 |
| Dimethylcyclohexylamin | — | — | — | — | 2 | 2 | — | — |
| Trichlorfluormethan | 40 | 40 | 40 | 40 | 40 | 40 | 40 | 40 |
| Polypropylenglykol, OH-Zahl 56 | 34 | 34 | 34 | 34 | 25 | 25 | 34 | 34 |
| Trichlorethylphosphat | 34 | 34 | 34 | 34 | 25 | 25 | 34 | 34 |
| Siliconstabilisator | 1,7 | 1,7 | 1,7 | 1,7 | 1,2 | 1,2 | 1,7 | 1,7 |
| Wasser | 10 | — | — | — | 10 | — | 10 | 10 |
| Glycerin | — | — | — | — | 3 | 3 | | |
| Lösung I | | 33 | | | | 33 | | |
| Lösung II | | | 16 | | | | | |
| Lösung III | | | | 33 | | | | |

### Tabelle (Fortsetzung)

| Beispiel | 1 | 2 | 3 | 4 | 5 | 6 | 7 | 9 |
|---|---|---|---|---|---|---|---|---|
| Stärke | | | | | | | 20 | |
| Sorbit | | | | | | | | 20 |
| polymeres 4,4'-Diphenylmethandiisocyanat mit 45% 4,4'-MDI | 100 | 100 | 100 | 100 | 100 | 100 | 100 | 100 |
| Rührzeit (s) | 5 | 5 | 5 | 5 | 5 | 5 | 5 | 5 |
| Liegezeit (s) | 7 | 8 | 8 | 8 | 7 | 7 | 8 | 8 |
| Abbindezeit (s) | 45 | 45 | 45 | 45 | 39 | 48 | 47 | 46 |
| Schrumpf RT | nein | nein | nein | nein | ja | nein | nein | nein |
| Rohdichte (kg/m³) | 8 | 10 | 9 | 10 | 7,8 | 10 | 10 | 10 |
| Wärmeleitzahl W/K.m. | | | 0,042 | | | | | |
| Kleinbrennert. DIN 4102 | B 3 | B 2 | B 2 | B 2 | B 3 | B 2 | B 3 | B 3 |
| Kantenbefl. K (mm) | >150 | 100 | 120 | 100 | >150 | | >150 | >150 |
| Flächenbefl. F | 120 | 100 | 120 | 120 | | | | |

Lösung I  30% Wasser, 30% Oligosaccharose, 40% Sorbit
Lösung II  62% Wasser, 38% Rohrzucker
Lösung III  30% Wasser, 18% Oligosaccharose, 52% Sorbit

## Patentansprüche

1. Verfahren zur Herstellung von flammwidrigen Harnstoff- und Urethangruppen aufweisenden Leichtschaumstoffen einer Dichte von höchstens 0,025 g/cm³ durch Umsetzung eines Polyisocyanats mit wasserlöslichen Mono- und/oder Oligosacchariden und Wasser als Treibmittel in Gegenwart von mindestens zwei Hydroxylgruppen aufweisenden organischen Verbindungen einer OH-Zahl von 30 bis 250, Katalysatoren und phosphorhaltigen organischen Verbindungen als Flammschutzmittel sowie gegebenenfalls in Gegenwart von Kettenverlängerungsmitteln vom Molekulargewicht 32 bis 62 und weiteren, an sich bekannten Hilfs- und Zusatzmitteln, dadurch gekennzeichnet, dass das Polyisocyanat mit mindestens 1 Eq Wasser, in dem die Mono- und/oder Oligosaccharide gelöst worden sind, umgesetzt wird.

2. Verfahren gemäss Anspruch 1, dadurch gekennzeichnet, dass auf 100 Gew.-Teile Polyisocyanat 2 bis 30 Gew.-Teile Mono- und/oder Oligosaccharid verwendet wird.

3. Verfahren gemäss den Ansprüchen 1 und 2, dadurch gekennzeichnet, dass eine wässerige Lösung von Monosacchariden, die zu mindestens 10 Gew.-% (bezogen auf Monosaccharide) an Oligosacchariden enthält, verwendet wird.

4. Verfahren gemäss Anspruch 1 bis 3, dadurch gekennzeichnet, dass als Mono- und/oder Oligosaccharid eine Sorbose mit einem Oligosaccharidanteil von 10 bis 80 Gew.-% eingesetzt wird.

5. Verfahren gemäss Anspruch 1 bis 4, dadurch gekennzeichnet, dass als Polyisocyanat ein Gemisch aus Diphenylmethandiisocyanaten und Polyphenylpolymethylenpolyisocyanaten verwendet wird, das höchstens 50 Gew.-% 4,4'- und 2,4'-Diphenylmethandiisocyanat enthält.

6. Leichtschaumstoffe, erhältlich nach den Verfahren gemäss den Ansprüchen 1 bis 5.

## Claims

1. Process for the production of flame-resistant light foams containing urea and urethane groups and having a density of at most 0.025 g/cm³ by reacting a polyisocyanate with water-soluble mono- and/or oligosaccharides and water as the blowing agent in the presence of organic compounds containing at least two hydroxyl groups and having an OH number of 30 to 250, catalysts and phosphoruscontaining organic compounds as the flameproofing agents and optionally in the presence of chain-extending agents having a molecular weight of 32 to 62 and other auxiliaries and additives known per se, characterised in that the polyisocyanate is reacted with at least one equivalent of water in which the mono- and/or oligosaccharides have been dissolved.

2. Process according to Claim 1, characterised in that 2 to 30 parts by weight of mono- and/or oligosaccharide are used to 100 parts by weight of polyisocyanate.

3. Process according to Claims 1 and 2, characterised in that an aqueous solution of monosaccharides which contains at least 10% by weight (based on the monosaccharides) of oligosaccharides, is used.

4. Process according to Claims 1 to 3, characterised in that a sorbose having an oligosaccharide content of 10 to 80% by weight is used as the mono- and/or oligosaccharide.

5. Process according to Claims 1 to 4, characterised in that a mixture of diphenylmethane diisocyanates and polyphenyl polymethylene polyisocyanates, which contains at most 50% by weight of 4,4'- and 2,4'-diphenylmethane diisocyanate, is used as the polyisocyanate.

6. Light foams, obtainable by the process according to Claims 1 to 5.

## Revendications

1. Procédé de fabrication de mousses légères ignifuges comportant des groupes urée et uréthanne d'une densité maximale de 0,025 g/cm³ par réaction d'un polyisocyanate avec des mono- et/ou des oligosaccharides hydrosolubles et de l'eau comme agent moussant, en présence de composés organiques comportant au moins deux groupes hydroxy et ayant un indice OH de 30 à 250, de catalyseurs et de composés organiques phosphorés comme agents ignifuges, ainsi que, éventuellement, en présence d'agents d'allongement de chaîne d'un poids moléculaire de 32 à 62 et d'autres substances auxiliaires et additifs connus en soi, caractérisé en ce qu'on fait réagir le polyisocyanate avec au moins un équivalent d'eau dans laquelle les mono- et/ou les oligosaccharides sont dissous.

2. Procédé suivant la revendication 1, caractérisé en ce qu'on utilise 2 à 30 parties en poids de mono- et/ou d'oligosaccharide pour 100 parties en poids de polyisocyanate.

3. Procédé suivant les revendications 1 et 2, caractérisé en ce qu'on utilise une solution aqueuse de monosaccharides contenant au moins 10% en poids (calculé sur les monosaccharides) d'oligosaccharides.

4. Procédé suivant les revendications 1 à 3, caractérisé en ce que, comme mono- et/ou oligosaccharide, on utilise un sorbose ayant une teneur en oligosaccharide de 10 à 80% en poids.

5. Procédé suivant les revendications 1 à 4, caractérisé en ce que, comme polyisocyanate, on utilise un mélange de diphénylméthanediisocya-nates et de polyphénylpolyméthylènepolyisocya-nates contenant, au maximum, 50% en poids de 4,4'- et de 2,4'-diphénylméthanediisocyanate.

6. Mousses légères obtenues par le procédé suivant les revendications 1 à 5.